# EUROPÄISCHE PATENTSCHRIFT

(11) **EP 3 631 514 B1**
(45) Veröffentlichungstag und Bekanntmachung des Hinweises auf die Patenterteilung: **07.06.2023**
(21) Anmeldenummer: 18726459.3
(22) Anmeldetag: 22.05.2018
(51) Int. Cl.: G01S 19/02

(54) **SATELLITENSYSTEM FÜR DIE NAVIGATION UND/ODER DIE GEODÄSIE**
SATELLITE SYSTEM FOR NAVIGATION AND/OR GEODESY
SYSTÈME DE SATELLITES POUR LA NAVIGATION ET/OU LA GÉODÉSIE

(30) Priorität: 22.05.2017 DE 102017111091
(43) Veröffentlichungstag der Anmeldung: 08.04.2020
(73) Patentinhaber: Deutsches Zentrum für Luft- und Raumfahrt e.V., 51147 Köln (DE)
(72) Erfinder: GÜNTHER, Christoph, 82234 Weßling (DE); FURTHNER, Johann, 94469 Deggendorf (DE)
(74) Vertreter: dompatent von Kreisler Selting Werner - Partnerschaft von Patent- und Rechtsanwälten mbB
(86) Internationale Anmeldenummer: PCT/EP2018/063347
(87) Internationale Veröffentlichungsnummer: WO 2018/215440

(56) Entgegenhaltungen:
- CN-B- 101 793 526
- US-A- 5 982 323
- EXERTIER PIERRE ET AL: "Time biases in laser ranging observations: A concerning issue of Space Geodesy", ADVANCES IN SPACE RESEARCH, ELSEVIER, AMSTERDAM, NL, Bd. 60, Nr. 5, 17. Mai 2017 (2017-05-17), Seiten 948-968, XP085136692, ISSN: 0273-1177, DOI: 10.1016/J.ASR.2017.05.016
- MENG WENDONG ET AL: "Design and experiment of onboard laser time transfer in Chinese Beidou navigation satellites", ADVANCES IN SPACE RESEARCH, ELSEVIER, AMSTERDAM, NL, Bd. 51, Nr. 6, 30. August 2012 (2012-08-30), Seiten 951-958, XP028981158, ISSN: 0273-1177, DOI: 10.1016/J.ASR.2012.08.007
- HODGE C C ET AL: "Ultra-stable optical frequencies for space", 19990413; 19990413 - 19990416, 13. April 1999 (1999-04-13), Seiten 663-666, XP010377742,

## Beschreibung

Die Erfindung betrifft ein Satellitensystem für die Navigation und/oder die Geodäsie.

Die heutigen Satellitennavigationssysteme strahlen Signale im Radiofrequenzbereich (L-Band) aus. Die Frequenz der Signale wird aus einer Atomuhr abgeleitet. Die Bahn der Satelliten und die Ablage der Uhren werden durch Bodenmessungen ermittelt. Diese Systeme werden auch für die Geodäsie eingesetzt. Zusätzlich wurden für die Geodäsie einige spezifische Missionen gestartet, wie beispielweise GRACE, GOCE und LAGEOS.

Die heutigen Satellitennavigationssysteme weisen einige Nachteile auf. So sind die heutigen Navigationssysteme recht stark von einer komplexen Bodeninfrastruktur abhängig. Aufgrund der Einwegmessungen in heutigen Satellitennavigationssystemen lassen sich Zeit, Höhe und Troposphärenverzögerung nur recht schwer trennen. Die Bahnkomponente in Flugrichtung ist besonders schlecht bestimmbar. Die bekannten Systeme werden zwar für die Geodäsie mitbenutzt, wurden aber dafür nicht ausgelegt.

Plag, HP., Pearlman, M: The Global Geodetic Observing System: Meeting the Requirements of a Global Society on a Changing Planet in 2020, The Reference Document (V0.18), The Global Geodetic Observing System of the International Association of Geodesy IAG/GGOS, GGOS 2020 Web Page, 20.03.2008, http://www.iag-ggos.org/sci/ggos2020/versions/GGOS2020_REF_DOC_V0.18. pdf beschreibt das Konzept für ein Global Geodetic Observing System (GGOS) der International Association of Geodesy (IAG) (siehe Seite 8, linke Spalte, Absatz 2). Es besteht aus fünf Beobachtungsebenen (siehe Seite 144, Fig. 70), mit der Ebene 1 der Bodenstationen, der Ebene 2 der LEO-Satelliten, der Ebene 3 der MEO/GEO-Satelliten, der Ebene 4 der Planeten und der Ebene 5 der Quasare. Die Ebenen 1 bis 3 entsprechen dem beanspruchten System aus Anspruch 1 der Anmeldung. Für das GGOS-Konzept wird die Verwendung neuester Technologie vorgeschlagen, z. B. optische Überragung zwischen den Satelliten und hochgenaue optische Uhren in den Satelliten (siehe Seite 151, linke Spalte, Absatz 1).

Gill, P., Margolis H.S., et al.: Optical Atomic Clocks for Space. Technical Supporting Document, National Physical Laboratory, UK, November 2008, http://www.npl.co.uk/upload/pdf/atomic_clocks_space.pdf beschreibt technische Möglichkeiten für optische Uhren für Weltraumanwendungen. Auch hier wird die Verwendung optischer Uhren und die Kommunikation zwischen den Satelliten mittels optischer Übertragung vorgeschlagen (siehe Seite 25, Seite 73, Kapitel 3.5.1.3, Seite 74, Kapitel 3.5.1.4).

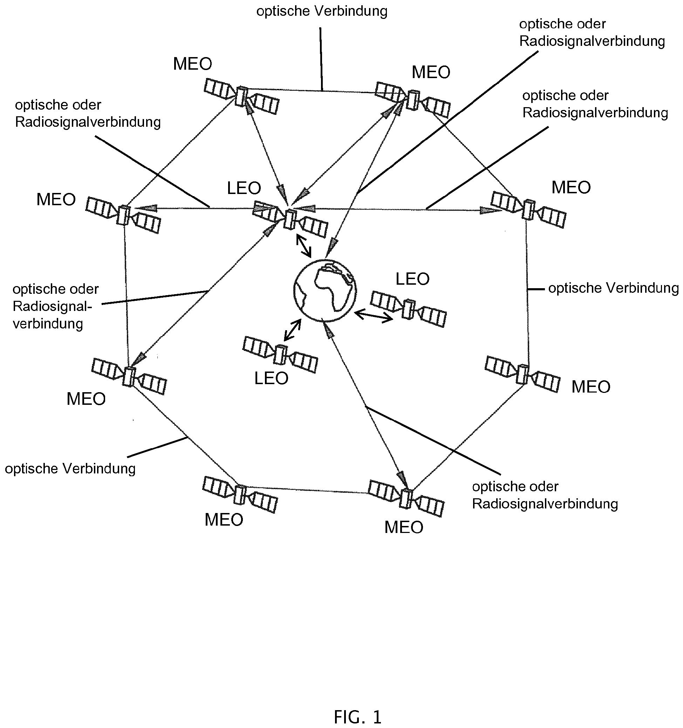

US-A-2016/0065308 zeigt ein Satelliten-Kommunikationssystem für optische Breitband Freiraum Kommunikation. Das System beinhaltet eine beispielhafte MEO-Satellitenkonstellation mit acht Satelliten (siehe Fig. 1), die eine zusammenhängende Abdeckung eines Bandes der Erde (d. h. gemeinsame Umlaufbahn) bilden. Jeder Satellit der MEO-Satellitenkonstellation ist optisch mit den nächsten Nachbarn verbunden, auch voraus und hinterherfliegend (siehe Fig. 1, Absatz 20). Die Satelliten dieser MEO-Konstellation sind mit Bodenstationen verbunden (siehe Fig. 1, Absatz 23). Kombinationen von LEO-Satelliten und MEO-Satelliten sind für dieses Satelliten-Kommunikationssystem ebenfalls vorgeschlagen (siehe Absatz 27).

CN 101 793 526 B betrifft ein System, das einen Sonden-Formationsflug im interstellaren Raum unterstützten soll. Fern von der Erde werden Signale von Pulsaren verwendet, im erdnahen Bereich auch GNSS Signale. Zudem werden die Sonden über Laserlinks verbunden, um deren Abstand untereinander zu bestimmen und um die Sonden zu synchronisieren. Diese Synchronisation ist für die Nutzung der externen Signale (Pulsar und GNSS) hilfreich. Nach CN 101 793 526 B werden Laserlinks ausschließlich auf der Nutzerseite eingesetzt, also von den Sonden, die sich im interstellaren Raum bewegen.

Das Dokument US5982323 A offenbart ein System nach dem Obergriff des Anspruchs 1.

Aufgabe der Erfindung ist es, ein in mehrerlei Hinsicht verbessertes Satellitennavigationssystem anzugeben, das auch für die Verwendung in der Geodäsie ausgelegt ist.

Zur Lösung dieser Aufgabe wird mit der Erfindung ein Satellitensystem für die Navigation und die Geodäsie gemäß Anspruch 1 vorgeschlagen, wobei das Satellitensystem versehen ist mit
- mehreren jeweils eine eigene Uhr aufweisenden MEO-Satelliten (in einer Höhe von 10.000 km bis 30.000 km), die auf Bahnebenen verteilt angeordnet sind und um die Erde fliegen, wobei sich in jeder Bahnebene mehrere, insbesondere acht MEO-Satelliten befinden, und
- mehreren LEO-Satelliten und, optional, mehreren Bodenstationen,
- wobei jeder MEO-Satellit zwei optische Terminals für die bidirektionale Übertragung optischer Freistrahl-Signale mittels Laser mit dem in der gleichen Bahnebene jeweils ersten und/oder zweiten vorausfliegenden MEO-Satelliten und dem ersten und/oder zweiten hinterher fliegenden MEO-Satellit aufweist,
- wobei mit Hilfe der optischen Freistrahl-Signale die Uhren der MEO-Satelliten pro Bahnebene miteinander zu einer für diese Bahnebene geltenden Bahnebenenzeit synchronisiert werden und
- wobei die Bahnebenenzeiten in den einzelnen Bahnebenen der MEO-Satelliten (MEO) unter Verwendung von optischen Signalen und/oder Radiowellen über die LEO-Satelliten (LEO) synchronisiert werden.

Die Erfindung schlägt ein Satellitensystem für die Navigation und die Geodäsie vor, bei dem mehrere Medium Earth Orbit (MEO) Satelliten eingesetzt werden, die auf mindestens zwei, vorzugsweise drei Bahnebenen verteilt angeordnet, um die Erde fliegen. In jeder Bahnebene befinden sich mehrere MEO-Satelliten und zwar insbesondere acht. Zwischen den MEO-Satelliten jeder Bahnebene existiert eine einfach oder mehrfach optische Verbindung jeweils benachbarter Satelliten mit optischen Frequenznormalen, d. h. ein Zeitbasis mit Laserunterstützung. Damit kann eine sehr stabile Systemzeitskala mit extrem hoher Kurzzeitstabilität aufgebaut werden, wenn, was mit Vorteil vorgesehen ist, jeder MEO-Satellit einen Kavitäts- bzw. resonatorstabilisierten Laser mit optischem Resonator aufweist, der die Zeitbasis des MEO-Satelliten bildet. Im Medium Earth Orbit unterliegt die optische Freistrahlkommunikation keinerlei Einflüssen durch die Erdatmosphäre, so dass diese die Genauigkeit der Bahneben-Systemzeit nicht beeinträchtigt. Neben dem erfindungsgemäß hochgenauen Referenzsystem in der Zeit kann mit dem erfindungsgemäßen Vorschlag auch ein hochpräzises Referenzsystem für den Raum aufgebaut werden, da die Bahnen stabil sind und hochgenau vermessen werden. Über dezidierte optische Einzelkommunikationsverbindungen von MEO-Satelliten zu den LEO-Satelliten und von diesen zu den Bodenstationen bzw. direkt von den MEO-Satelliten zu den Bodenstationen kann dann eine Synchronisierung mit am Boden befindlichen Referenzsystemen (für sowohl die Zeit als auch den Raum) hergestellt werden. Die Genauigkeit von Frequenz- und Zeitsynchronisierung sowie der Distanzmessungen zu verschiedenen Objekten im Weltraum und/oder auf der Erde kann im Vergleich zum Stand der Technik mit dem erfindungsgemäßen Satellitensystem mit weitaus höherer Präzision ermittelt werden.

In vorteilhafter Weiterbildung der Erfindung ist vorgesehen, dass die Uhr jedes MEO-Satelliten einen durch eine optische Kavität stabilisierten Laser aufweist.

In weiterer zweckmäßiger Ausgestaltung der Erfindung kann vorgesehen sein, dass die MEO-Satelliten Radiosignale für die Navigation abstrahlen (beispielsweise im L- oder S-Band) und diese mittels eines Frequenzkamms mit den hochstabilen optischen Uhren-Signalen synchronisiert werden.

Gemäß einer vorteilhaften Ausgestaltung der Erfindung kann vorgesehen sein, dass LEO-Satelliten (in einer Höhe von 400 bis 1.500 km) und/oder Bodenstationen mit Navigationsempfängern ausgerüstet sind, um die Radiosignale der MEO-Satelliten zu empfangen.

Ferner kann gemäß einer vorteilhaften Ausgestaltung der Erfindung vorgesehen sein, dass die LEO-Satelliten mit Sendern und die MEO-Satelliten mit Empfängern für Radiosignale ausgerüstet sind, um bi-direktionale Pseudorange-Vermessungen der MEO- und/oder LEO-Satelliten durchzuführen.

Gemäß einer weiteren vorteilhaften Ausgestaltung der Erfindung kann vorgesehen sein, dass die MEO-Satelliten mit einem Terminal ausgerüstet sind, das auf zumindest jeweils einen der LEO-Satelliten und/oder jeweils eine der Bodenstationen ausrichtbar ist.

In vorteilhafter Weiterbildung der Erfindung ist vorgesehen, dass mindestens ein LEO-Satellit mindestens ein optisches Terminal trägt.

In weiterer zweckmäßiger Ausgestaltung der Erfindung kann vorgesehen sein, dass auf LEO-Satelliten und/oder in Bodenstationen Uhren mit einer sehr großen Langzeitstabilität (im Sinne einer niedrigen Allan-Standardabweichung) betrieben werden und die zeitsynchronisierte Konstellation von MEO-Satelliten zur Zeitverteilung genutzt wird.

Ferner ist es von Vorteil, dass die MEO-Satelliten und/oder LEO-Satelliten und/oder die Bodenstationen Messungen und/oder sonstige Informationen über optische Signale oder Radiowellen austauschen.

In weiterer zweckmäßiger Ausgestaltung der Erfindung kann vorgesehen sein, dass auf LEO-Satelliten und/oder Kontrollstationen am Boden, z. B. die Bodenstationen, die Bahnen, Signalversätze und gegebenenfalls atmosphärische Parameter schätzen und diese Informationen über optische Signale und/oder Radiowellen an die MEO-Satelliten verteilen.

Gemäß einer weiteren vorteilhaften Ausgestaltung der Erfindung kann vorgesehen sein, dass z. B. mittels Beschleunigungssensoren ermittelbare Bahnvariationen von LEO-Satelliten zur Vermessung des Erdgravitationsfeldes verwendbar sind.

Ferner kann gemäß einer vorteilhaften Ausgestaltung der Erfindung vorgesehen sein, dass z. B. mittels Abstandsmessungen zwischen den MEO-Satelliten jeder Bahnebene ermittelbare Bahnvariationen von MEO-Satelliten zur Vermessung des Strahlungsdrucks der Sonne verwendbar sind.

In vorteilhafter Weiterbildung der Erfindung ist vorgesehen, dass, wie bereits oben angedeutet, die Uhr jedes MEO-Satelliten einen kavitäts- bzw. resonatorstabilisierten Laser mit optischem Resonator aufweist.

Von Vorteil ist es ferner, wenn die MEO-Satelliten in gleichem Abstand oder in im Wesentlichen gleichen Abstand um die Erde fliegen, wobei der Abstand im Bereich zwischen 20.000 km und 25.000 km und insbesondere bei 23.000 km liegt, während ferner mit Vorteil vorgesehen sein kann, dass die LEO-Satelliten mehrere höher fliegende erste LEO-Satelliten, die in einem gleichen ersten Abstand von oder im Wesentlichen von 1.000 km bis 1.400 km, insbesondere von 1.200 km um die Erde fliegen, und mehrere tiefer fliegende zweite LEO-Satelliten umfassen, die in einem gleichen zweiten Abstand von 200 km bis 600 km, insbesondere 300 km oder 400 km bis 600 km um die Erde fliegen.

In weiterer zweckmäßiger Ausgestaltung der Erfindung kann vorgesehen sein, dass die LEO-Satelliten zur Kommunikation mit sowohl den MEO-Satelliten als auch den Bodenstationen Frequenztransformatoren, insbesondere Frequenzkämme zur Umwandlung der optischen Signale der MEO-Satelliten in Radiosignale für die Bodenstationen und umgekehrt aufweisen.

Die LEO-Satelliten und insbesondere, sofern vorhanden, die tiefer fliegenden LEO-Satelliten eigenen sich zweckmäßigerweise zur Vermessung des Erdgravitationsfeldes und weisen zu diesem Zweck kavitäts- bzw. resonatorstabilisierte Laseruhren und/oder Inertialsensoren auf.

Ferner ist es von Vorteil, dass sich aufgrund der erfindungsgemäßen zumindest kurzzeitig extrem hohen Zeitstabilität zwischen den MEO-Satelliten einer gemeinsamen Bahnebene die MEO-Satellitenbahnen und -geschwindigkeiten und/oder der Sonnendruck hochgenau vermessen lassen. Die Einflüsse des Sonnendrucks besagen, dass ein Satellit, der auf seiner Bahn um die Erde der Sonnen entgegenfliegt, langsamer fliegt, als wenn er sich von der Sonne entfernt. Aufgrund der hochstabilen Signale der resonatorstabilisierten Laser lassen sich diese kleinsten Geschwindigkeitsabweichungen nun vermessen und für die aktuelle Bestimmung des Standorts der MEO-Satelliten verwenden.

In weiterer zweckmäßiger Ausgestaltung der Erfindung kann vorgesehen sein, dass die Bodenstationen zum Abgleich der durch die LEO-Satelliten abgeglichenen Bahnebenenzeiten der MEO-Satelliten mit einem bzw. mit dem terrestrischen Zeitreferenzsystem unter Berücksichtigung einer potentiellen Relativrotation der Erde und der MEO-Satellitenanordnung verwendbar sind.

Das erfindungsgemäße Satellitensystem für die Navigation und die Geodäsie macht in vorteilhafter Weise von den bei der Erfindung gewonnenen Erkenntnissen Gebrauch, dass
- resonatorstablilisierte Laser ein wesentlich stabileres Signal erzeugen als quarzstabilisierte Schwingkreise,
- mit optischen Uhren (zumindest im Labor) weitaus höhere Stabilität erreicht wurde als durch heutige Atomuhren,
- optische Signale eine deutlich bessere zeitliche und räumliche Auflösung ermöglichen als Radiosignale,
- als Frequenztransformatoren eingesetzte Frequenzkämme in der Lage sind, optische Signale in Radiosignale umzusetzen und
- moderne und kompakte Inertialsensoren die Messung kleinster Beschleunigungen ermöglichen, so dass sie für die Vermessung des Erdgravitationsfeldes eingesetzt werden können, wobei sich herausgestellt hat, dass hierzu neben den erfindungsgemäß vorgesehenen Uhren zusätzlich die hochgenauenen Initialsensoren verwendet werden können, wie sie von den Herren Professor Braxmaier in Bremen und Professor Ertmer in Hannover vorgeschlagen werden.

Das erfindungsgemäße Satellitensystem lässt sich auf sämtlichen Gebieten der heutigen Satellitennavigation und der Geodäsie einsetzen, allerdings mit wesentlich höherer Genauigkeit als dies bisher der Fall ist, und zwar insbesondere auch als Echtzeit Precise Point Positioning (PPP).

In der Zeichnung ist beispielhaft ein Ausführungsbeispiel eines Aufbaus des erfindungsgemäßen Satellitensystems gezeigt, wobei hier lediglich eine von mehreren, vorzugsweise drei gleichmäßig verkippten Bahnebenen für die MEO-Satelliten sowie die LEO-Satelliten gezeigt sind. Ferner sind die Bodenstationen angedeutet. In der Zeichnung ist die Architektur des Systems grob dargestellt. Die äußeren MEO-Satelliten enthalten kavitätsstabilisierte Laser. Diese werden innerhalb einer Bahnebene über optische bi-direktionale Links synchronisiert, und zwar durch einen an sich bekannten Zeitabgleich. Die inneren LEO-Satelliten stellen die optische Verbindung zwischen den MEO-Satelliten der einzelnen Bahnebenen her und vermessen die Navigationssignale.

Die Architektur besteht also aus einer Medium Earth Orbit (MEO) Teilkonstellation und einer Low Earth Orbit (LEO) Teilkonstellation. Die Satelliten sind untereinander optisch vernetzt. Die Verbindungen werden zur Synchronisation, Abstandsmessung und Datenübertragung verwendet. Die wesentlichen Unterschiede zum Stand der Technik sind:
- der Einsatz von optischen Resonatoren in der Satellitennavigation
- der optische Zeittransfer zwischen diesen Satelliten (ranging wurde bereits gemacht), insbesondere unter Verwendung von kohärenten Phasenmessungen
- die daraus berechnete extrem stabile Zeit im Kurzeitbereich in jeder Bahnebene
- die Verknüpfung der Bahnebenen über LEO Satelliten bzw. den Boden
- die Synchronisierung mit optischen Uhren in LEO Bahnen
- die Vermessung der Signale der MEO Satelliten durch Empfänger auf den LEO Satelliten

Das System besteht aus MEO-Satelliten in drei Bahnebenen (ähnlich wie bei Galileo oder GLONASS) und einer Anzahl von darunter fliegenden Satelliten in Low Earth Orbit (LEO). Die freilaufende Zeitbasis der MEO-Satelliten wird im optischen Bereich durch Laser erzeugt und über eine Kavität stabilisiert, was zu einer sehr hohen Kurzeitstabilität führt. Die freilaufenden Zeitbasen der Satelliten werden innerhalb einer Bahnebene durch bi-direktionale Laserlinks synchronisiert. Auf Grund der enormen zeitlichen Auflösung der Laserlinks ist diese Synchronisation extrem gut (die absolute Messauflösung liegt im Bereich von 10⁻¹² Sekunden); Frequenzen können noch genauer vergleichen werden.

Beschränkend wirken sich allenfalls Vibrationen des Satelliten aus). Die drei hochgenau synchronisierten Satellitenebenen liefern drei Zeiten, die vorzugsweise optisch und bi-direktional über einen oder mehrere der LEO-Satelliten miteinander abgeglichen werden. Dies schafft eine enorm steif synchronisierte Zeitreferenz im gesamten System. Die optischen bi-direktionalen Verbindungen werden weiter verwendet, um Abstände zu vermessen und den Sonnendruck sowie die Bahnen der Satelliten hochgenau zu schätzen. Schließlich werden diese Verbindungen auch noch für die Datenübertragung verwendet.

Mit einem Frequenzkamm wird die Stabilität des optischen Zeitmess-Systems auf Radiowellen übertragen. Die Frequenzen der Radiowellen liegen heute überwiegend im unteren und mittleren L-Band. Bei solchen Wellenlängen durchdringen Signale problemlos Wolken und lassen sich in kompakten terrestrischen Empfängern verarbeiten. Die gleichen Signale werden aber auch von den LEO-Satelliten empfangen und verarbeitet, um die Satellitenbahnen und um Instrumentenversätze zu bestimmen. Dies gelingt deshalb besonders gut, da die Signale die Atmosphäre nicht durchqueren und deshalb von dieser auch nicht verfälscht werden. Der gesamte Datenaustausch in diesem System kann über die bi-direktionalen optischen Verbindungen und damit vollständig innerhalb des Systems erfolgen. Das bisher beschriebene Satellitensystem alleine, also ohne terrestrische Infrastruktur, liefert die Möglichkeit der hochgenauen Positionierung relativ zu einem abstrakten satellitenbasierten Referenzsystem. Mit einer Bodeninfrastruktur wird dieses Referenzsystem mit einem terrestrischen Referenzsystem abgeglichen. Kritisch ist dabei in erster Linie eine mögliche Rotation zwischen den beiden Systemen. Weiter kann einer Bodeninfrastruktur dazu genutzt werden, um atmosphärische Parameter und Erdgezeiten zu vermessen. Messdaten vom Boden können über geeignete Radio-Verbindungen (heute im C-Band) an das Satellitensystem zurückgemeldet werden, so dass die terrestrische Infrastruktur nicht getrennt vernetzt werden muss. Dabei genügt an jedem Standort eine einzige C-Band Antenne, die auf einen Satelliten, d. h. LEO- oder MEO-Satelliten ausgerichtet ist, da die Daten optisch innerhalb des Systems über die Verbindungen zwischen den Satelliten an den Zielsatelliten weitergeleitet werden können (heute werden an den Uplinkstationen mehrere Antennen benötigt).

Die Satelliten selbst tragen mindestens drei optische Terminals. Eines ist auf den in der gleichen Bahnebene vorausfliegenden Satelliten ausgerichtet. Eines auf den hinterher fliegenden Satelliten. Und ein weiteres zeigt nach unten, Richtung LEO Satelliten oder Erde. Das dritte Terminal stellt also eine Verbindung zu LEO Satelliten her. Alternativ kann es auch auf die Erde ausgerichtet werden. Es dient einerseits zur Synchronisierung der Bahnen und andererseits zur Bahnbestimmung (MEO und LEO). Die Zeitbasis des oben beschriebenen Systems ist über kurze Zeiten extrem stabil, was für die Navigation völlig ausreichend ist. Das System kann aber auch zum Vergleich hochstabiler Uhren am Boden verwendet werden oder um die Zeit solch hochstabiler Uhren an die Nutzer zu liefern. Besonders interessant ist es auch, hochstabile Uhren für die LEO-Satelliten zu verwenden und dort eine Weltzeit zu erzeugen. Wenn diese Uhren eine Stabilität von 10⁻¹⁸ Sekunden besitzen, können Sie zur Vermessung des Erdgravitationsfeldes verwendet werden.

Die LEO-Satelliten fliegen so niedrig, dass Sie perfekt zur Vermessung des Erdschwerefeldes verwendet werden können. Außer Uhren können hierzu zusätzlich hochgenaue Inertialsensoren herangezogen werden, wie sie bei Prof. Braxmaier in Bremen und Prof. Ertmer in Hannover gebaut werden.

## Patentansprüche

1. Satellitensystem für die Navigation und/oder die Geodäsie, mit
- mehreren jeweils eine eigene Uhr aufweisenden MEO-Satelliten (MEO), die auf Bahnebenen verteilt angeordnet sind und um die Erde fliegen, wobei sich in jeder Bahnebene mehrere, insbesondere acht MEO-Satelliten (MEO) befinden, und
- mehreren LEO-Satelliten (LEO) und, optional, mehreren Bodenstationen,
- wobei jeder MEO-Satellit (MEO) zwei optische Terminals für die bidirektionale Übertragung optischer Freistrahl-Signale mittels Laser mit dem in der gleichen Bahnebene jeweils ersten und/oder zweiten vorausfliegenden MEO-Satelliten (MEO) und dem ersten und/oder zweiten hinterher fliegenden MEO-Satellit (MEO) aufweist,
- wobei mit Hilfe der optischen Freistrahl-Signale die Uhren der MEO-Satelliten (MEO) pro Bahnebene miteinander zu einer für diese Bahnebene geltenden Bahnebenenzeit synchronisiert werden,
- **dadurch gekennzeichnet, dass** die Bahnebenenzeiten in den einzelnen Bahnebenen der MEO-Satelliten (MEO) unter Verwendung von optischen Signalen und/oder Radiowellen über die LEO-Satelliten (LEO) synchronisiert werden.

2. Satellitensystem nach Anspruch 1, **dadurch gekennzeichnet, dass** die Uhr jedes MEO-Satelliten (MEO) einen durch eine optische Kavität stabilisierten Laser aufweist.

3. Satellitensystem nach Anspruch 2, **dadurch gekennzeichnet, dass** die MEO-Satelliten (MEO) Radiosignale für die Navigation abstrahlen und diese mittels eines Frequenzkamms mit den hochstabilen optischen Uhren-Signalen synchronisiert werden.

4. Satellitensystem nach einem der Ansprüche 1 bis 3, **dadurch gekennzeichnet, dass** LEO-Satelliten (LEO) und/oder Bodenstationen mit Navigationsempfängern ausgerüstet sind, um Radiosignale der MEO-Satelliten (MEO) zu empfangen.

5. Satellitensystem nach einem der Ansprüche 1 bis 4, **dadurch gekennzeichnet, dass** die LEO-Satelliten (LEO) mit Sendern und die MEO-Satelliten (MEO) mit Empfängern für Radiosignale ausgerüstet sind, um bi-direktionale Pseudorange-Vermessungen der MEO- und/oder LEO-Satelliten (MEO/LEO) durchzuführen.

6. Satellitensystem nach einem der Ansprüche 1 bis 5, **dadurch gekennzeichnet, dass** die MEO-Satelliten (MEO) mit einem Terminal ausgerüstet sind, das auf zumindest jeweils einen der LEO-Satelliten (LEO) und/oder jeweils eine der Bodenstationen ausrichtbar ist.

7. Satellitensystem nach einem der Ansprüche 1 bis 6, **dadurch gekennzeichnet, dass** mindestens ein LEO-Satellit (LEO) mindestens ein optisches Terminal trägt.

8. Satellitensystem nach einem der Ansprüche 1 bis 7, **dadurch gekennzeichnet, dass** auf LEO-Satelliten (LEO) und/oder in Bodenstationen Uhren mit einer sehr großen Langzeitstabilität betrieben werden und die zeitsynchronisierte Konstellation von MEO-Satelliten (MEO) zur Zeitverteilung genutzt wird.

9. Satellitensystem nach einem der Ansprüche 1 bis 8, **dadurch gekennzeichnet, dass** die MEO-Satelliten (MEO) und/oder LEO-Satelliten (LEO) und/oder die Bodenstationen Messungen und/oder sonstige Informationen über optische Signale oder Radiowellen austauschen.

10. Satellitensystem nach einem der Ansprüche 1 bis 9, **dadurch gekennzeichnet, dass** LEO-Satelliten (LEO) und/oder Kontrollstationen am Boden, die Bahnen, Signalversätze und gegebenenfalls atmosphärische Parameter schätzen, und diese Informationen über optische Signale und/oder Radiowellen an die MEO-Satelliten (MEO) verteilen.

11. Satellitensystem nach einem der Ansprüche 1 bis 10, **dadurch gekennzeichnet, dass** Bahnvariationen von LEO-Satelliten (LEO) zur Vermessung des Erdgravitationsfeldes verwendbar sind.

12. Satellitensystem nach Anspruch 11, **dadurch gekennzeichnet, dass** die Bahnvariationen mittels Beschleunigungssensoren ermittelbar sind.

13. Satellitensystem nach einem der Ansprüche 1 bis 12, **dadurch gekennzeichnet, dass** pro Bahnebene zwischen den jeweiligen MEO-Satelliten (MEO) ermittelbare Bahnvariationen von MEO-Satelliten (MEO) zur Vermessung des Strahlungsdrucks der Sonne verwendbar sind.

14. Satellitensystem nach Anspruch 13, **dadurch gekennzeichnet, dass** die Bahnvariationen zwischen den jeweiligen MEO-Satelliten (MEO) pro Bahnebene mittels Abstandsmessungen ermittelbar sind.

## Claims

1. A satellite system for navigation and/or geodesy, comprising
- a plurality of MEO satellites (MEO) each comprising a dedicated clock, the MEO satellites (MEO) being arranged in a distributed manner on orbital planes and orbit the Earth, wherein a plurality of MEO satellites (MEO), in particular eight, are located in each orbital plane, and
- a plurality of LEO satellites (LEO) and, optionally, a plurality of ground stations,
- wherein each MEO satellite (MEO) comprises two optical terminals for bidirectional transmission of optical free-beam signals by means of laser with the respectively first and/or second MEO satellite (MEO) orbiting ahead in the same orbital plane and with the first and/or second MEO satellite (MEO) orbiting behind,
- wherein, by means of the optical free-beam signals, the clocks of the MEO satellites (MEO) are synchronized with each other for each orbital plane at an orbital plane time applicable to said orbital plane,
**characterized in that** the
- orbital plane times in the individual orbital planes of the MEO satellites (MEO) are synchronized using optical signals and/or radio waves via the LEO satellites (LEO).

2. The satellite system according to claim 1, **characterized in that** the clock of each MEO satellite (MEO) comprises a laser stabilized by an optical cavity.

3. The satellite system according to claim 2, **characterized in that** the MEO satellites (MEO) transmit radio signals for navigation and synchronize said radio signals with the highly stable optical clock signals by means of a frequency comb.

4. The satellite system according to any one of claims 1 to 3, **characterized in that** the LEO satellites (LEO) and/or ground stations are equipped with navigation receivers to receive radio signals of the MEO satellites (MEO).

5. The satellite system according to any one of claims 1 to 4, **characterized in that** the LEO satellites (LEO) are equipped with transmitters and the MEO satellites (MEO) are equipped with receivers for radio signals to perform bidirectional pseudorange measurements of the MEO and/or LEO satellites (MEO/LEO).

6. The satellite system according to any one of claims 1 to 5, **characterized in that** the MEO satellites (MEO) are equipped with a terminal that can be aligned with at least respectively one of the LEO satellites (LEO) and/or respectively one of the ground stations.

7. The satellite system according to any one of claims 1 to 6, **characterized in that** at least one LEO satellite (LEO) carries at least one optical terminal.

8. The satellite system according to any one of claims 1 to 7, **characterized in that** clocks with a very high long-term stability are operated on LEO satellites (LEO) and/or in ground stations, and that the time-synchronized constellation of MEO satellites (MEO) is used for time distribution.

9. The satellite system according to any one of claims 1 to 8, **characterized in that** the MEO satellites (MEO) and/or the LEO satellites (LEO) and/or the ground stations exchange measurements and/or other information on optical signals or radio waves.

10. The satellite system according to any one of claims 1 to 9, **characterized in that** LEO satellites (LEO) and/or control stations on the ground estimate the orbits, signal offsets and, if applicable, atmospherical parameters and distribute this information via optical signals and/or radio waves to the MEO satellites (MEO).

11. The satellite system according to any one of claims 1 to 10, **characterized in that** orbital variations of LEO satellites (LEO) are adapted to be used to measure the Earth's gravitational field.

12. The satellite system according to claim 11, **characterized in that** the orbital variations are adapted to be determined by means of acceleration sensors.

13. The satellite system according to any one of claims 1 to 12, **characterized in that** orbital variations of MEO satellites (MEO) adapted to be determined for each orbital plane between the respective MEO satellites (MEO) can be used for measuring the radiation pressure of the Sun.

14. The satellite system according to claim 13, **characterized in that** the orbital variations between the respective MEO satellites (MEO) for each orbital plane are adapted to be determined by means of distance measurements.

## Revendications

1. Système de satellites pour la navigation et/ou la géodésie, doté
- de plusieurs satellites MEO (MEO) comportant chacun une horloge propre, lesquels sont répartis sur des plans orbitaux et volent autour de la Terre, dans lequel plusieurs, en particulier huit, satellites MEO (MEO)se trouvent dans chaque plan orbital et
- de plusieurs satellites LEO (LEO) et, en option, de plusieurs stations terrestres,
- dans lequel chaque satellite MEO (MEO) comporte deux terminaux optiques pour la transmission bidirectionnelle par laser de signaux optiques à rayonnement libre avec le premier et/ou le deuxième satellite MEO (MEO) qui le précède respectivement dans le même plan orbital et avec le premier et/ou le deuxième satellite MEO (MEO) qui le suit,
- dans lequel à l'aide des signaux optiques à rayonnement libre les horloges des satellites MEO (MEO) de chaque plan orbital sont synchronisées entre elles pour obtenir une heure de plan orbital valide pour ce plan orbital,
- **caractérisé en ce que** les heures de plan orbital dans les plans orbitaux individuels des satellites MEO (MEO) sont synchronisées par le biais des satellites LEO (LEO) en utilisant des signaux optiques et/ou des ondes radio.

2. Système de satellites selon la revendication 1, **caractérisé en ce que** l'horloge de chaque satellite MEO (MEO) comporte un laser stabilisé par une cavité optique.

3. Système de satellites selon la revendication 2, **caractérisé en ce que** les satellites MEO (MEO) émettent des signaux radio pour la navigation et ceux-ci sont synchronisés avec les signaux d'horloge optiques ultrastables au moyen d'un peigne de fréquences.

4. Système de satellites selon l'une des revendications 1 à 3, **caractérisé en ce que** les satellites LEO (LEO) et/ou les stations terrestres sont équipés de récepteurs de navigation afin de recevoir des signaux radio des satellites MEO (MEO).

5. Système de satellites selon l'une des revendications 1 à 4, **caractérisé en ce que** les satellites LEO (LEO) sont équipés d'émetteurs et les satellites MEO (MEO) sont équipés de récepteurs pour des signaux radio afin de mettre en œuvre des mesures de pseudodistance bidirectionnelles des satellites MEO et/ou LEO (MEO/LEO).

6. Système de satellites selon l'une des revendications 1 à 5, **caractérisé en ce que** les satellites MEO (MEO) sont équipés d'un terminal pouvant être orienté sur au moins un satellite LEO (LEO) respectif et/ou sur une station terrestre respective.

7. Système de satellites selon l'une des revendications 1 à 6, **caractérisé en ce qu'**au moins un satellite LEO (LEO) porte au moins un terminal optique.

8. Système de satellites selon l'une des revendications 1 à 7, **caractérisé en ce que** des horloges à très haute stabilité à long terme sont utilisées sur des satellites LEO (LEO) et/ou dans des stations terrestres et la constellation synchronisée en heure des satellites MEO (MEO) est utilisée pour la répartition du temps.

9. Système de satellites selon l'une des revendications 1 à 8, **caractérisé en ce que** les satellites MEO (MEO) et/ou les satellites LEO (LEO) et/ou les stations terrestres échangent des mesures et/ou d'autres informations par le biais de signaux optiques ou d'ondes radio.

10. Système de satellites selon l'une des revendications 1 à 9, **caractérisé en ce que** des satellites LEO (LEO) et/ou des stations de commande terrestres évaluent les orbites, les décalages de signaux et éventuellement les paramètres atmosphériques, et distribuent ces informations aux satellites MEO (MEO) par le biais de signaux optiques et/ou d'ondes radio.

11. Système de satellites selon l'une des revendications 1 à 10, **caractérisé en ce que** les variations d'orbite des satellites LEO (LEO) peuvent être utilisées afin de mesurer le champ gravitationnel terrestre.

12. Système de satellites selon la revendication 11, **caractérisé en ce que** les variations d'orbite peuvent être déterminées au moyen d'accéléromètres.

13. Système de satellites selon l'une des revendications 1 à 12, **caractérisé en ce que** les variations d'orbite de satellites MEO (MEO) pouvant être déterminées entre les satellites MEO (MEO) respectifs dans chaque plan orbital peuvent être utilisées afin de mesurer la pression de rayonnement solaire.

14. Système de satellites selon la revendication 13, **caractérisé en ce que** les variations d'orbite peuvent être déterminées entre les satellites MEO (MEO) respectifs dans chaque plan orbital au moyen de mesures à distance.
